# EUROPÄISCHE PATENTSCHRIFT

(11) **EP 2 318 559 B1**
(45) Veröffentlichungstag und Bekanntmachung des Hinweises auf die Patenterteilung: **22.10.2014**
(21) Anmeldenummer: 09811082.8
(22) Anmeldetag: 04.09.2009
(51) Int. Cl.: C22B 15/14, C22B 9/00, F27B 7/10, F27B 7/20, F27B 7/33, B22D 41/22

(54) **KUPFER-ANODENOFEN**
COPPER ANODE FURNACE
FOUR À ANODES DE CUIVRE

(30) Priorität: 05.09.2008 CH 14222008
(43) Veröffentlichungstag der Anmeldung: 11.05.2011
(73) Patentinhaber: Stopinc Aktiengesellschaft, 6311 Hünenberg (CH)
(72) Erfinder: AMSLER, Heinrich, CH-6404 Greppen (CH); ACKERMANN, Kurt, CH-6275 Ballwil (CH); GAMWEGER, Klaus, A-8700 Leoben (AT); HANDLE, Bernd, A-1060 Wien (AT)
(74) Vertreter: Luchs, Willi
(86) Internationale Anmeldenummer: PCT/EP2009/006448
(87) Internationale Veröffentlichungsnummer: WO 2010/025940

(56) Entgegenhaltungen:
- EP-A- 0 648 849
- DE-A1- 3 204 034
- DE-B1- 1 558 432
- FI-A- 974 334
- GB-A- 2 099 966
- RU-C1- 2 171 437
- US-A- 3 760 993
- US-A- 4 795 139

## Beschreibung

Die Erfindung betrifft einen Kupfer-Anodenofen gemäss dem Oberbegriff des Anspruches 1.

Kupfer-Anodenofen, in welchen Kupferschmelze mittels Flammraffination zu Anodenkupfer gereinigt und anschliessend das Kupfer in Anodenform abgegossen wird, sind bekannt. Die Anoden werden mittels Elektrolyse weiterverarbeitet. Die Qualität der Anoden beeinflusst wesentlich den Stromverbrauch, also die Wirtschaftlichkeit der Elektrolyse.

Der Kupfer-Anodenofen umfasst bekanntlich eine um eine horizontale Achse verschwenkbare Ofentrommel, in der die Kupferschmelze mit 95-98% Cu in zwei Stufen auf eine Reinheit von etwa 99% gebracht wird, wobei zuerst eine Oxidation der unerwünschten Begleitelemente (vorrangig des Schwefels) stattfindet und anschliessend der durch die Oxidation stark angestiegene Sauerstoffgehalt in einer Reduktionsphase wieder abgesenkt wird. Das Kupfer wird über ein am Umfang der Ofentrommel angeordnetes Abstichloch abgegossen. Beim Abguss wird die Ofentrommel Stück für Stück nachgedreht, um die Giessgeschwindigkeit zu regulieren und dem sinkenden Schmelzbadniveau Rechnung zu tragen. Daraus ergeben sich einige Nachteile. Durch die Position des Abstichloches - sehr nahe der Badoberfläche - wird Schlacke mit abgegossen, wodurch die Anodenqualität beeinträchtigt wird. Zudem ist die Fallhöhe des Kupfers vom Abstich in ein Rinnensystem hoch, so dass es zur Wiederaufnahme des zuvor mühsam entfernten Sauerstoffs kommt, was ebenfalls zur Verschlechterung der Anodenqualität führt. Ausserdem kommt es zu einer starken Verschmutzung der Umgebung durch das aufspritzende Kupfer, wobei auch Materialverluste zu verzeichnen sind.

Bei einem Verfahren zum Austragen eines Materials aus einem Drehofen gemäss der Druckschrift DE-A-32 04 034 wird das Material einer Wärmebehandlung unterworfen. Bei diesem Drehofen ist eine Ausgussrinne sowie ein Offen- und Absperrventil vorgesehen. Mit diesem Absperrventil wird nicht ein kontrolliertes Abgiessen ermöglicht.

Der vorliegenden Erfindung liegt die Aufgabe zugrunde, einen Kupfer-Anodenofen der eingangs genannten Art zu schaffen, der eine effiziente Herstellung von Anoden mit einer verbesserten Anodenqualität ermöglicht.

Diese Aufgabe wird erfindungsgemäss durch einen Kupfer-Anodenofen mit den Merkmalen des Anspruches 1 gelöst.

Beim erfindungsgemässen Kupfer-Anodenofen wird dem mit dem sinkenden Schmelzbadniveau ebenfalls sinkenden hydrostatischen Druck nicht durch Nachdrehen der Ofentrommel Rechnung getragen, um die Durchflussgeschwindigkeit des Kupfers zu regeln, sondern die Ausflussmenge wird mittels eines am Ausguss der Ofentrommel angeordneten Schiebeverschlusses gesteuert. Der Ausguss kann durch Verschwenkung der Ofentrommel aus einer oberhalb des Schmelzbades liegenden Stellung, in der er sich während der Behandlung der Kupferschmelze befindet, in eine Giessstellung gebracht werden, in der er sich mit Vorteil in einer tiefen Lage unmittelbar oberhalb von Rinnen zum Abgiessen von Anoden befindet, und in welcher Giessstellung er während des gesamten Giessvorganges verbleibt. Es ist dabei von Vorteil, dass kein die Anodenqualität beeinträchtigendes Einziehen von Schlacke in den Abguss droht.

Ferner ist die Fallhöhe des Kupfers vom Ausguss in das Rinnensystem klein, so dass kein Aufspritzen des Kupfers erfolgt. Dadurch wird nicht nur der Reinigungsaufwand wesentlich verringert, sondern auch wesentlich wenigere Kupferverluste verursacht. Die eingesparte Kupfermenge braucht nicht mehr wieder eingeschmolzen zu werden, was auch eine Verringerung der CO₂ -Emissionen bedeutet.

Durch die geringere Fallhöhe wird auch die unerwünschte Wiederaufnahme des zuvor mühsam entfernten Sauerstoffs wesentlich verringert und dadurch die Anodenqualität verbessert.

Ein weiterer Vorteil des erfindungsgemässen, mit dem Schiebeverschluss am Ausguss der Ofentrommel versehenen Kupfer-Anodenofens besteht darin, dass in einer Gefahrensituation ein sofortiger Notstopp eingeleitet werden kann.

Die Erfindung wird nachfolgend anhand der Zeichnung näher erläutert. Es zeigt:

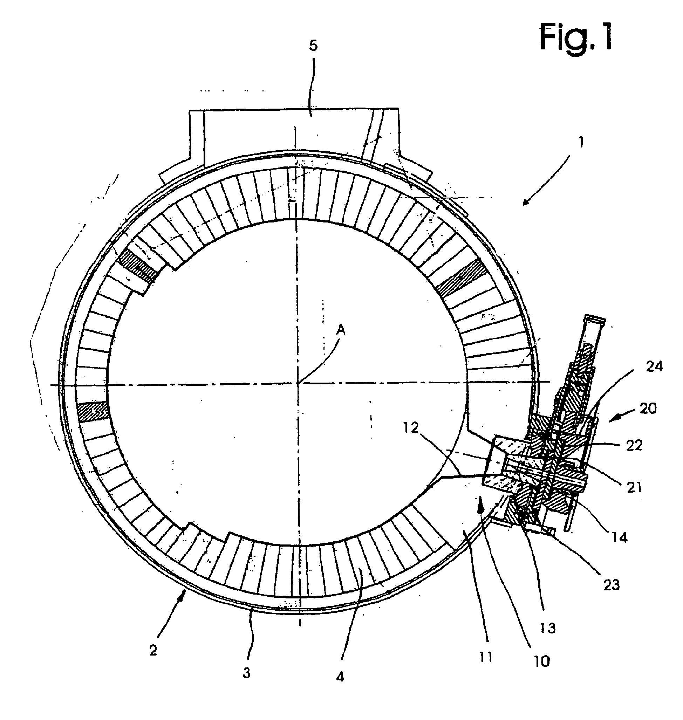

- Fig. 1: ein Ausführungsbeispiel eines erfindungsgemässen Kupfer-Anodenofens im vertikalen Querschnitt.

In Fig.1 ist ein Kupfer-Anodenofen 1 dargestellt, der eine um eine horizontale Achse A verschwenkbare Ofentrommel 2 umfasst. Die Ofentrommel 2 weist einen zylindrischen Stahlmantel 3 sowie eine feuerfeste Auskleidung 4 auf. In die Ofentrommel 2 wird über eine Einfüllöffnung 5 Kupferschmelze mit 95 - 98% Cu eingefüllt, wobei maximal 60% des Ofentrommel-Volumens gefüllt wird. Die Kupferschmelze wird in der Ofentrommel 2 mittels einer Flammraffination in einer an sich bekannten und daher nicht näher beschriebenen Weise zu Anodenkupfer mit etwa 99% Cu gereinigt. Dabei findet zuerst eine Oxidation der unerwünschten Begleitelemente (vorrangig des Schwefels) statt, und anschliessend wird der durch die Oxidation stark angestiegene Sauerstoffgehalt in einer Reduktionsphase wieder abgesenkt.

Die Ofentrommel 2 ist an ihrem Umfang mit einem Ausguss 10 versehen, der zum Abgiessen des gereinigten Kupfers in ein aus der Zeichnung nicht ersichtliches Rinnensystem dient. Im Ausgussbereich der feuerfesten Verkleidung 4 befindet sich ein feuerfester Lochstein 11, der eine Auslassöffnung 12 aufweist, sowie eine an diesen anschliessende feuerfeste Hülse 13 mit einer Auslassöffnung 14. Die Auslassöffnung 12 des Lochsteines 11 ist so ausgebildet, dass sie sich zu der Hülse 13 hin verjüngt und einen entsprechenden Einlaufwinkel bildet. Die Auslassöffnung 14 der feuerfesten Hülse 13 erweitert sich konisch zum Lochstein 11 hin oder weist zumindest einen sich konisch zum Lochstein 11 hin erweiternden Teil auf.

Am Ausguss 10 der Ofentrommel 2 ist erfindungsgemäss ein Schiebeverschluss 20 angeordnet, der eine feststehende feuerfeste Verschlussplatte 21 sowie eine dieser gegenüber verschiebbare feuerfeste Schieberplatte 22 umfasst. Die feststehende feuerfeste Verschlussplatte 21 ist in einem an der Ofentrommel 2 montierten Gehäuse 23 befestigt und liegt dichtend an der feuerfesten Hülse 13 an. Die feuerfeste Schieberplatte 22 ist in einer Schiebereinheit 24 gehalten. Durch Verschieben der Schiebereinheit 24 und der darin eingesetzten Schieberplatte 22 kann der durch die Auslassöffnungen 12, 14 gebildete Auslass aus der Ofentrommel 2 aus der in Fig. 1 veranschaulichten Offenstellung in eine Drossel- oder Schliessstellung gebracht werden.

Selbstverständlich könnte anstelle eines lediglich eine feststehende Verschlussplatte umfassenden Schiebeverschlusses auch ein solcher mit zwei feststehenden Verschlussplatten und einer dazwischen verschiebbar angeordnete Schieberplatte aufweisender Verwendung finden.

Der grosse Einlaufswinkel des feuerfesten Lochsteines 11 und die Ausbildung der feuerfesten Hülse 13 (konischer Teil der Auslassöffnung 14) tragen dazu bei, dass möglichst viel heisses Kupfer in die Nähe des Schiebeverschlusses 20 gebracht wird, wodurch die Neigung des Kupfers bei geschlossenem Schiebeverschluss 20 im Giesskanal zu erstarren vermindert wird.

Ein solches Einfrieren von Kupfer im Auslass kann noch zusätzlich verhindert werden, indem bei geschlossenem Schiebeverschluss 20 vorzugsweise durch einen in der Schieberplatte 22 versehenen Spülstopfen mit einem Gasanschluss ein Argongas in den Auslass eingeblasen wird, was nicht näher gezeigt ist.

Während der Behandlung der Kupferschmelze befindet sich der mit dem Schiebeverschluss 20 versehene Ausguss 10 in einer oberhalb des Schmelzbades liegenden Stellung. Für den Abguss wird er durch Verschwenkung der Ofentrommel 2 in eine Giessstellung gebracht, in der er sich in einer tiefen Lage unmittelbar oberhalb von Rinnen zum Abgiessen von Anoden befindet, und in der er während des gesamten Giessvorganges verbleibt. Es wird dem mit dem sinkenden Schmelzbadniveau ebenfalls sinkenden hydrostatischen Druck nicht durch Nachdrehen der Ofentrommel 2 Rechnung getragen, um die Durchflussgeschwindigkeit des Kupfers (Giessgeschwindigkeit) zu regeln, sondern die Durchflussgeschwindigkeit wird mittels des Schiebeverschlusses 20, durch Verschieben der Schiebereinheit 24, gesteuert. Dies bringt einige wesentliche Vorteile.

Dadurch, dass sich der Ausguss 10 stets in einer tiefen Lage befindet, droht kein die Anodenqualität beeinträchtigendes Einziehen von Schlacke in den Abguss.

Ferner ist die Fallhöhe des Kupfers vom Ausguss 10 in das Rinnensystem klein, so dass kein Aufspritzen des Kupfers erfolgt. Dadurch wird nicht nur der Reinigungsaufwand wesentlich verringert, sondern auch wesentlich wenigere Kupferverluste verursacht. Somit können beispielsweise bei einem 120 t-Anodenofen pro Monat 100-120 t mehr Anoden abgegossen werden. Die eingesparte Kupfermenge braucht nicht mehr wieder eingeschmolzen zu werden, was auch eine Verringerung der CO₂ -Emissionen bedeutet.

Durch die geringere Fallhöhe wird auch die unerwünschte Wiederaufnahme des zuvor mühsam entfernten Sauerstoffs wesentlich verringert und dadurch die Anodenqualität verbessert. Es ist auch möglich, mittels eines Schattenrohres den Luftsauerstoff völlig abzuschotten.

Ein weiterer Vorteil des erfindungsgemässen, mit dem Schiebeverschluss am Ausguss der Ofentrommel versehenen Kupfer-Anodenofens besteht darin, dass in einer Gefahrensituation ein sofortiger Notstopp eingeleitet werden kann.

## Patentansprüche

1. KupferAnodenofen mit einer um eine horizontale Achse verschwenkbaren Ofentrommel (2), die einen zylindrischen Stahlmantel (3) sowie eine feuerfeste Auskleidung (4) umfasst, in welcher Kupferschmelze mittels Flammraffination zu Anodenkupfer gereinigt wird und die einen Ausguss (10) zum Abgiessen des gereinigten Kupfers aufweist, **dadurch gekennzeichnet, dass** am Ausguss (10) der Ofentrommel (2) ein Schiebeverschluss (20) angeordnet ist, der mindestens eine feststehende feuerfeste Verschlussplatte (21) sowie eine dieser gegenüber verschiebbare feuerfeste Schieberplatte (22) umfasst, wobei durch die Verschiebung der Schieberplatte (22) der Auslass aus der Ofentrommel (2) drosselbar bzw. verschliessbar und somit die Ausflussmenge des Kupfers steuerbar ist, wobei in der Ofentrommel (2) im Ausgussbereich ein feuerfester Lochstein (11) sowie eine an diesen anschliessende feuerfeste Hülse (13) vorgesehen sind, die jeweils eine Auslaßöffnung (12, 14) bilden, wobei sich die Auslassöffnung (12) des Lochsteines (11) konisch zu der Hülse (13) hin verjüngt und einen Einlaufwinkel bildet, dass sich der Ausguss (10) in der Giessstellung in einer tiefen Stellung annähernd senkrecht nach unten unmittelbar oberhalb von Rinnen zum Abgiessen von Anoden befindet und die Auslassöffnung (14) der feuerfesten Hülse 13) sich konisch zum Lochstein (11) hin erweitert oder zumindest einen sich konisch zum Lochstein (11) hin erweiternden Teil aufweist.

## Claims

1. A copper anode furnace comprising a furnace drum (2), which can be pivoted about a horizontal axis and comprises a cylindrical steel coating (3) and a fireproof lining (4), in which copper melt is refined into anode copper by means of fire refining and which has a spout (10) for pouring out the refined copper, **characterised in that**
a sliding closure (20) is arranged on the spout (10) of the furnace drum (2), said sliding closure comprises at least one stationary, refractory closing plate (21) and a refractory sliding plate (22), which can be displaced relative to said closing plate, by displacing the sliding plate (22) it being possible to regulate or close the outlet from the furnace drum (2), and so to control the outflow amount of the copper, whereby in the furnace drum (2) in the pour-out region a refractory brick (11) and a fireproof nozzle (13) adjoining the latter being provided, which respectively form an outlet opening (12, 14), whereby the outlet opening (12) of the refractory brick (11) tapering conically towards the nozzle (13) and forming a feeding angle, that in the casting position the spout (10) is located in a low position approximately perpendicularly downwards directly above channels for the pouring off of anodes and the outlet opening (14) of the refractory nozzle (13) extends conically towards the brick (11) or has at least one part extending conically towards the perforated brick (11).

## Revendications

1. Four pour anodes de cuivre avec un tambour (2) de four tournant autour d'un axe horizontal qui comprend un manteau (3) cylindrique en acier et un revêtement (4) externe réfractaire, dans lequel du cuivre en fusion est purifié en cuivre anode au moyen d'un raffinage par feu de flamme et qui présente un bec (10) pour couler le cuivre purifié, **caractérisé en ce que** le bec (10) du tambour (2) de four présente une fermeture coulissante (20) avec au moins une plaque (21) de fermeture réfractaire fixe et une plaque (22) à coulisse réfractaire mobile, l'orifice de sortie du tambour (2) de four - et donc la quantité de cuivre écoulée - pouvant être commandé par inductance d'arrêt ou fermeture, dans le tambour (2) de four présentant dans la zone du bec une pierre percée (11) réfractaire et une douille réfractaire (13) reliée à celle-ci qui forment respectivement une ouverture (12, 14), l'ouverture (12) de la pierre percée (11) se réduisant en cône vers la douille (13) et formant un angle d'arrivée, de sorte que le bec (10) en position de coulée se trouve juste au-dessus des écheneaux pour couler des anodes, dans une position basse proche de la verticale vers le bas, et l'ouverture (14) de la douille réfractaire (13) s'évasant en cône vers la pierre percée (11) ou présentant au moins une partie s'évasant en cône vers la pierre percée (11).
